# EUROPEAN PATENT APPLICATION

(11) **EP 2 858 027 A1**
(43) Date of publication of application: **08.04.2015**
(21) Application number: 12878038.4
(22) Date of filing: 31.05.2012
(51) Int. Cl.: G06Q 50/10, G06F 15/16

(54) **METHOD, SERVER, AND COMPUTER-READABLE RECORDING MEDIUM FOR PROVIDING AUGMENTED REALITY SERVICE**

(71) Applicant: Intel Corporation, Santa Clara, CA 95054 (US)
(72) Inventor: RYU, Jung Hee, Seoul 138-930 (KR); CHOI, Gil Nam, Seoul 135-925 (KR)
(74) Representative: Hutchinson, Glenn Stanley
(86) International application number: PCT/KR2012/004292
(87) International publication number: WO 2013/180320

(57) **Abstract**

The present invention relates to a method for providing an augmented reality service including the steps of: (a) receiving an image from a camera; (b) performing an image matching operation on the image input from an image matching server; (c) when the image is matched with a specific image from among pre-stored items, determining whether augmented reality can be carried out for the image using matched result in an API server; (d) providing augmented reality contents to embody the augmented reality scenario in the AR contents server when said image is determined to be an image that can be embodied into an augmented reality; and (e) carrying out, by means of a terminal, the augmented reality using content for the augmented reality. According to the present invention, augmented reality can be carried out for various images which are input from a camera, not by storing data required to carry out the augmented reality in a memory space in a limited terminal, but by adopting an image matching technique before carrying out the augmented reality, and receiving, from a server, data necessary for carrying out the augmented reality for a corresponding image.

## Description

### Technical Field

The present invention relates to a method, a server and a computer-readable recording medium for providing an augmented reality service, and more specifically to the method, server and computer-readable recording medium for providing an augmented reality service, which can provide an augmented reality service, without being restricted by a limited memory space and using an image matching technique, and determines whether the content on an input image corresponds to a region to be displayed as augmented reality or a region to be played back as a moving image or the like so that the content corresponding to an applicable region may be outputted.

### Background

Augmented reality (AR) is a kind of virtual reality, which combines a real world shown in the eyes of a user and a virtual world having additional information to show it as one image. Although such augmented reality is partly similar to virtual reality, a virtual reality provides a user only with virtual spaces and objects whereas the augmented reality characteristically synthesizes virtual information on the basis of real world inputs and provides the information reinforced by additional information that is difficult to obtain only from the real world. Unlike the virtual reality based on a perfect virtual world, the augmented reality may provide a user with a better sense of reality by adding virtual objects to an environment of a real world. Research and development of such an augmented reality service has begun to progress in the USA and Japan from the late 1990s, and recently, a variety of augmented reality services are provided due to improvements in computing capabilities of mobile devices such as a cellular phone, a PDA (personal digital assistant), an UMPC (ultra mobile personal computer) and the like, and advances in wireless network devices. For example, an object in a real environment may be photographed through a camera of a cellular phone, and attribute information related to the object may be virtually created and fused with the object of the real environment to be output on a screen.

An example of a conventional technique for providing such an augmented reality service is the invention of Korean Published Patent No. 10-2012-0003323 disclosed on 01/10/2012, entitled 'Mobile terminal and method of displaying information using augmented reality thereof.' Since information on an object provided in an augmented reality should be stored in a limited memory of a terminal and the augmented reality is implemented using the information to provide such a conventional augmented reality service, there is a problem in that the amount of images capable of being implemented in the augmented reality is extremely limited. Furthermore, there is also a problem in that it is not possible to reproduce various kinds of content only by simply determining whether a region needs to be implemented as augmented reality.

### Detailed Description of the Invention

### Technical Tasks

An object of the present invention is to solve all the problems described above.

In addition, another objective of the present invention is to provide a method, a server and a computer-readable recording medium for providing an augmented reality service, which can implement various images as augmented reality by receiving data required for implementing a corresponding image as the augmented reality from a server using an image matching technique and implementing the augmented reality, without storing the data required for implementing the augmented reality in a limited memory space of a terminal.

In addition, still another objective of the present invention is to provide a method, a server and a computer-readable recording medium for providing an augmented reality service, which determine whether the contents on an input image is a region to be displayed as augmented reality or a region to be played back as a general image or the like so that the content corresponding to an applicable region may be outputted.

### Means for Task Solution

The representative configurations of the present invention for achieving the aforementioned objects are as follows:

According to one aspect of the present invention, is provided a method for providing an augmented reality service at an API server comprising a step in which if it is determined after performing an image matching operation at an image matching server using an image input through a camera of a terminal that the input image matches with a certain image among images stored in the image matching server, the API server receives the matching results and it is determined based on the above whether contents related to the input image has been decided to be displayed as augmented reality; and a step in which if the content related to the input image is decided to be displayed as an augmented reality, the API server directly requests an AR content server to provide augmented reality content for implementing an augmented reality scenario, or requests the AR content server to provide the augmented reality content for implementing an augmented reality scenario by way of the terminal.

According to another aspect of the present invention, is provided a method for providing an augmented reality service at an AR content server, comprising a step in which, if an image input through a camera of a terminal is used as a target and an image matching operation is performed at an image matching server and it is determined that the input image is matched to a specific image among images previously stored in the image matching server, and if an API server receives the matching result and determines based on it whether content related to the input image is decided to be displayed as augmented reality, the AR contents server receives a request directly from the API server to provide augmented reality content for implementing an augmented reality scenario or receives a request from the API server to provide augmented reality content for implementing an augmented reality scenario by way of the terminal; and a step in which the AR content server transmits the augmented reality content to a terminal.

According to still another aspect of the present invention, is provided a method for providing an augmented realty service at a first augmented reality service providing server, comprising a step in which if the first augmented reality service providing server performs image matching on an image input through a camera of a terminal as a target and determines that the input image is matched to a specific image among images stored in the first augmented reality service providing server, the first augmented reality providing server determines based on the matching result whether content related to the input image is decided to be displayed as augmented reality; and a step in which if the first augmented reality service providing server determines that the content related to the input image is decided to be displayed as augmented reality, the first augmented reality service providing server directly requests an AR content server to provide augmented reality content for implementing an augmented reality scenario or requests the AR content server to provide augmented reality content for implementing an augmented reality scenario by way of the terminal.

According to still another aspect of the present invention, is provided a method for providing an augmented reality service at a second augmented reality service providing server, comprising a step in which if it is determined that the image input is matched to a specific image among images stored in the image matching server as a result of performing an image matching operation on an input image through a camera of a terminal as a target at an image matching server, the second augmented reality service providing server receives the matching result and determines based on it whether content related to the input image is decided to be displayed as augmented reality; and a step in which if the second augmented reality service providing server determines that content related to the input image is decided to be displayed as augmented reality, the second augmented reality service providing server extracts and transmits augmented reality content for implementing an augmented reality scenario to a terminal.

According to still another aspect of the present invention, is provided a method for providing an augmented realty service at a third augmented reality service providing server, comprising a step in which if the third augmented reality service providing server performs image matching on an image input through a camera of a terminal as a target and determines that the input image is matched to a specific image among images stored in the third augmented reality service providing server, the third augmented reality service providing server receives a request directly from the API server to provide augmented reality content for implementing an augmented reality scenario or receives a request from the API server to provide augmented reality content for implementing an augmented reality scenario by way of the terminal; and a step in which the third augmented reality service providing server transmits the augmented reality content to a terminal.

According to still another aspect of the present invention, is provided a method for providing an augmented realty service at a fourth augmented reality service providing server, comprising a step in which if the fourth augmented reality service providing server performs image matching on an image input through a camera of a terminal as a target and determines that the input image is matched to a specific image among images stored in the fourth augmented reality service providing server, the fourth augmented reality providing server determines based on the matching result that whether content related to the input image is decided to be displayed as augmented reality, the fourth augmented reality providing server determines based on the matching result that whether content related to the input image is decided to be displayed as augmented reality; and a step in which if it the content related to the input image is decoded to be displayed as augmented reality, the fourth augmented reality service providing server extracts and transmits augmented reality content for implementing an augmented reality scenario to a terminal.

According to still another aspect of the present invention, is provided an API server for providing an augmented reality service, comprising an AR region determination unit that, if it is determined after performing an image matching operation at an image matching server using an image input through a camera of a terminal that the input image matches with a certain image among images stored in the image matching server, receives the matching result and determines based on it whether content related to the input image is decided to be displayed as augmented reality, and a content request unit that, if the content related to the input image is decided to be displayed as an augmented reality, directly requests an AR content server to provide augmented reality content for implementing an augmented reality scenario, or requests the AR content server to provide the augmented reality content for implementing an augmented reality scenario by way of the terminal.

According to still another aspect of the present invention, is provided an AR content providing server for providing an augmented reality service, comprising a content request reception unit that, if an image input through a camera of a terminal is used as a target and an image matching operation is performed at an image matching server and it is determined that the input image is matched to a specific image among images previously stored in the image matching server, and if an API server receives the matching result and determines based on it whether content related to the input image is decided to be displayed as augmented reality, the receives a request directly from the API server to provide augmented reality content for implementing an augmented reality scenario or receives a request from the API server to provide augmented reality content for implementing an augmented reality scenario by way of the terminal; and a content providing unit that transmits the augmented reality content to a terminal.

According to still another aspect of the present invention, is provided a first augmented reality service providing server for providing an augmented reality service, comprising an AR region determination unit that, if it is determined after performing an image matching operation at an image matching server using an image input through a camera of a terminal that the input image matches with a certain image among images stored in the image matching server, determines based on the matching result whether content related to the input image is decided to be displayed as augmented reality; and a content request unit that, if the content related to the input image is decided to be displayed as an augmented reality, directly requests an AR content server to provide augmented reality content for implementing an augmented reality scenario, or requests the AR content server to provide the augmented reality content for implementing an augmented reality scenario by way of the terminal.

According to still another aspect of the present invention, is provided a second augmented reality service providing server for providing an augmented reality service, comprising an AR region determination unit that, if it is determined that the image input is matched to a specific image among images stored in the image matching server as a result of performing an image matching operation on an input image through a camera of a terminal as a target at an image matching server, receives the matching result and determines based on its whether content related to the input image is decided to be displayed as augmented reality; and a content providing unit that, if it is determined that content related to the input image is decided to be displayed as augmented reality, extracts and transmits augmented reality content for implementing an augmented reality scenario to a terminal.

According to still another aspect of the present invention is provided a third augmented reality service providing server for providing an augmented reality service, comprising a content request reception unit that, if an image matching operation is performed on the input image through a camera of a terminal and it is determined that the input image is matched to a specific image among stored images, and if an API server receives the matching result and determines based on if that content related to the input image is decided to be displayed an augmented reality, receives a request to provide augmented reality content for implementing an augmented reality scenario directly from the API server or receives a request to provide augmented reality content for implementing an augmented reality scenario from the API server by way of a terminal; and a content providing unit that transmit the augmented reality content to a terminal.

According to still another aspect of the present invention, is provided a fourth augmented reality service providing server for providing an augmented reality service, comprising an AR region determination unit that, if it is determined after performing an image matching operation at an image matching server using an image input through a camera of a terminal that the input image matches with a certain image among images stored in the image matching server, determines based on the matching result whether content related to the input image is decided to be displayed as augmented reality; and a content providing unit that, if it is determined that content related to the input image is decided to be displayed as augmented reality, extracts and transmits augmented reality content for implementing an augmented reality scenario to a terminal.

### Effects of the Invention

According to the present invention, it is possible to implement various images as augmented reality by receiving data required for implementing a corresponding image as the augmented reality from a server applying an image matching technique prior to implementing the augmented reality, without storing the data required for implementing the augmented reality in a limited memory space of a terminal.

Further, according to the present invention, it is possible to determine whether the content on an input image is a region to be displayed as augmented reality or a region to be played back as a general image or the like and output the content corresponding to an applicable region.

### Brief Description of the Drawings

FIG. 1 is a drawing schematically showing the configuration of an augmented reality service providing system according to an embodiment of the present invention.
FIG. 2 is a drawing describing a data transmission and reception procedure for providing an augmented reality service in an augmented reality service providing system according to an embodiment of the present invention.
FIG. 3 is a drawing describing a data transmission and reception procedure for providing an augmented reality service in an augmented reality service providing system according to an embodiment of the present invention.
FIG. 4 is a drawing describing a data transmission and reception procedure for providing an augmented reality service in an augmented reality service providing system according to an embodiment of the present invention.
FIG. 5 is a drawing describing a data transmission and reception procedure for providing an augmented reality service in an augmented reality service providing system according to an embodiment of the present invention.
FIG. 6 is a drawing describing a data transmission and reception procedure for providing an augmented reality service in an augmented reality service providing system according to an embodiment of the present invention.

### Embodiments of the Invention

In the following detailed description of the present invention, references are made to the accompanying drawings that show, by way of illustration, specific embodiments in which the present invention may be implemented. These embodiments are described in sufficient detail to enable those skilled in the art to implement the present invention. It should be understood that various embodiments of the present invention are different from one another but not necessarily mutually exclusive. For example, specific feature, structure, and characteristic described herein, in connection with one embodiment, may be implemented within other embodiments without departing from the spirit and scope of the present invention. In addition, it should be understood that the location or arrangement of individual elements within each disclosed embodiment may be modified without departing from the spirit and scope of the present invention. The following detailed description is, therefore, not to be taken in a limiting sense, and the scope of the present invention is defined only by the accompanying claims, appropriately interpreted, along with the full range equivalent to what the claims claim. In the drawings, similar reference numbers refer to the same or similar function through many aspects.

Hereinafter, preferred embodiments of the present invention will be described in detail with reference to the accompanying drawings in order for those skilled in the art to easily implement the present invention.

### First Embodiment

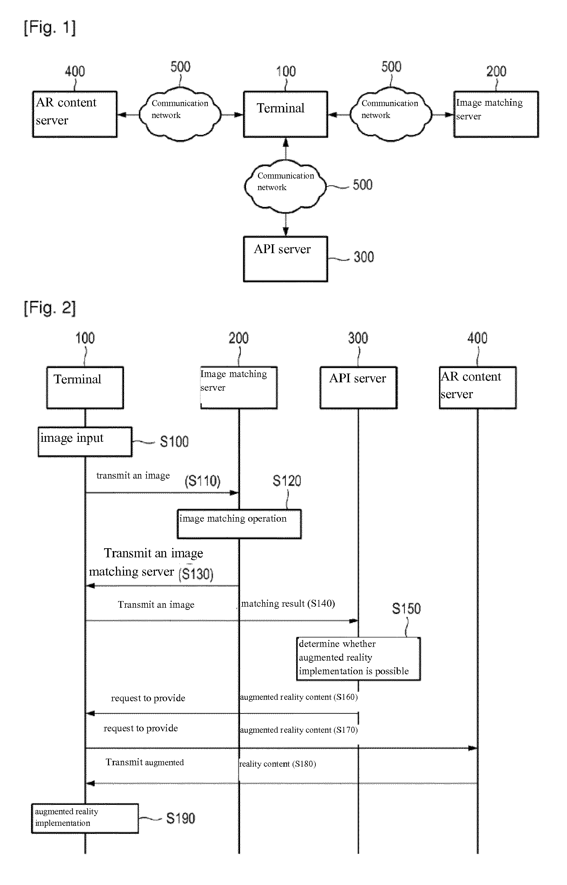

FIG. 1 is a view schematically showing the configuration of an augmented reality service providing system according to an embodiment of the present invention.

Referring to FIG. 1, the augmented reality service providing system may include a terminal (100), an image matching server (200), an API (application programming interface) server (300) and an AR (augmented reality) content server (400).

The terminal (100) is a digital device, and any portable digital device furnished with a memory means and equipped with a microprocessor to have operation capability, such as a personal computer (e.g., tablet computer, laptop computer, etc.), a PDA (personal digital assistant), a web pad, a cellular phone, may be adopted as the terminal (100) according to the present invention.

The terminal (100) may include a camera and an NFT (natural feature tracking) engine therein. The camera is configured of a conventional, general image pickup device, and for example, it may be a digital camera which uses a CCD (charge coupled device) to create digital image signals. In addition, an NFT engine performs a function of implementing augmented reality on an image input through the camera using provided AR content.

The image matching server (200) performs a function of comparing information on the image input through the camera with information on each of a plurality of images stored in a database and then outputting the result of the image matching. That is, after it is detected whether the image input through a camera is identical (or similar) to at least one of the plurality of images stored, a signal indicating being matched if it is determined to be matched and a signal indicating not being matched if it is determined to be mismatched can be output as a result of the image matching. At the time, whether the images are identical or similar to each other may be determined by comparing feature information extracted from the respective images with each other. If it is determined that the similarity between the images equals or exceeds a threshold similarity as a result of the comparison of feature information, the images may be determined to be identical or similar to each other. In addition, each of the plurality of images stored in the database may have an identification symbol, and the image matching server (200) may output the identification symbol of a matched image among the plurality of images as a signal indicating that the image is matched. As an example of the identification symbol, if the input image is an image of a specific person, the name or the like of the corresponding person may be used as the identification symbol. Alternatively, the image matching server (200) may output an index number of a matched image, and the index number may be a number matching to a memory storage space in the API server (300).

The inventors of the present invention have already filed a patent application relating to a method and apparatus for recognizing an input image by matching the input image to a previously stored image in Korean Patent Application No. 10-2011-0105547, entitled 'Face Recognition Method and Apparatus, and Computer-readable Recording Medium for Executing the Method,' which may be incorporated with the present invention.

The API server (300) performs a function of determining whether content related to the image matching to the identification symbol or index number is decided to be displayed as augmented reality based on the identification symbol or index number determined by the image matching server (200). In more detail, identification symbols or index numbers of images scheduled to be displayed as augmented reality are previously stored in the memory of the API server (300), and it is determined whether the content related to the image input through the camera is scheduled to be displayed as augmented reality by comparing the identification symbol or index number determined by the image matching server (200) with the identification symbols or index numbers previously stored in the API server (300). In addition, when the content related to the image is scheduled to be displayed as augmented reality, the API server (300) performs a function of outputting a signal for calling the content required to implement an augmented reality scenario scheduled for each image. In addition, the API server (300) may determine whether the content on the input image is a region to be displayed as augmented reality or a region to be played back as a general image and output the content corresponding to an applicable region.

If the AR content server (400) is requested to provide augmented reality content for implementing an augmented reality scenario from the API server (300) or requested to provide the augmented reality content for implementing an augmented reality scenario by way of a terminal, it performs a function of providing previously stored augmented reality content. In more detail, the augmented reality content, which is data for executing an augmented reality scenario, may include AR scenario data, feature value data created through trackable image data or applicable data, and 3D object data, and may be created in XML. The feature value data created through the trackable image data or the applicable data may be image data or feature information of the image data provided to the terminal (100) so that the terminal (100) may track (i.e., perform NFT on) a target determined to be matched by the image matching server (200), and the feature value data created through the trackable image data or the applicable data may be data separate from the feature information used for image matching by the image matching server (200). Meanwhile, the 3D object data mean data used for image matching of a 3D image on the surface of an object according to an augmented reality scenario.

The terminal (100) may transmit and receive data through the image matching server (200), the API server (300), the AR content server (400) and a communication network (500). Herein, the communication network (500) may be configured in a wireless communication scheme and include a variety of communication networks including a mobile communication network, a satellite communication network and the like. In more detail, the communication network mentioned in the present invention should be understood as a concept including any well-known communication networks such as WLAN (wireless LAN), CDMA (code division multiple access), WCDMA (wideband code division multiple access) and GSM (global system for mobile communications) networks.

Hereinafter, a data transmission and reception procedure for providing an augmented reality service in an augmented reality service providing system will be described. While not illustrated in the figure, the API server (300) may include an AR region determination unit and a content request unit, and the AR content server (400) may include a content request reception unit and a content providing unit, wherein each of the units may perform the operation for providing the augmented reality service described below.

FIG. 2 is a drawing describing a data transmission and reception procedure for providing an augmented reality service in an augmented reality service providing system according to an embodiment of the present invention. Referring to FIG. 2, the terminal (100) receives an image input through a camera formed therein (S100). The input image may be a single image photographed through a camera or an image input in a preview state. In the case that the input image is in a preview state, if a relative position of an object moves on the image as the terminal moves, the 3D image implemented on the image may also move together. This is possible because the feature data created through applicable trackable image data or applicable data is provided (e.g., provided in the form of download) to the terminal (100) so that the terminal (100) may track (i.e., perform NFT on) a target determined to be matched by the image matching server (200) as mentioned above.

The terminal (100) transmits the image to the image matching server (200) (S110), and the image matching server (200) performs an image matching operation on the input image (S120). A variety of conventional, well-known methods described above may be applied to the image matching operation. If the image matching is completed by the image matching server (200) and it is determined that the feature information of the input image has high similarity with the feature information of a specific image among the images previously stored in the image matching server (200), the image matching server (200) transmits a result of the image matching to the terminal (100) (S130).

The terminal (100) transmits the matching result transmitted from the image matching server (200) to the API server (300) (S140), and the AR region determination unit of the API server (300) determines whether the content related to the image input through the camera is decided to be displayed as augmented reality using the matching result (S150). The information output as the matching result may be an identification symbol or index number as described above. The API server (300) determines whether the content related to the image input through the camera is decided to be displayed as augmented reality by comparing the identification symbol or index number decided by the image matching server (200) with the identification symbols or index numbers previously stored in the API server (300). In addition, the API server (300) may determine whether the content on the input image is a region to be displayed as augmented reality or a region to be played back as a general image and output the content corresponding to an applicable region. If the content related to the input image is decided to be displayed as augmented reality, the content request unit of the API server (300) transmits a signal for calling the content required to implement an augmented reality scenario scheduled for an applicable image to the terminal (100)(S160).

The terminal (100) which has received the signal for calling the content required to implement an augmented reality scenario from the API server (300) requests the AR content server (400) to provide the augmented reality content required to implement an augmented reality scenario (S170). Of course, the present invention is not limited to the above, but the API server (300) may also directly request the AR content server (400) to provide the terminal (100) with the content required to implement an augmented reality scenario without going through the terminal (100). If the content request reception unit of the AR content server (400) receives the signal requesting to provide the augmented reality content from the terminal (100), the content providing unit transmits previously stored augmented reality content to the terminal (100) (S180).

The terminal (100) which has received the augmented reality content from the AR content server (400) implements the augmented reality by driving an NFT engine using the augmented reality content (S190).

While the image matching server (200), the API server (300) and the AR content server (400) may be configured as separated servers, the present invention is not limited to the above, but may be provided in such a form that a part of each server is integrated. A procedure of transmitting and receiving data between the terminal (100) and the respective servers will be described below in further detail in the case that the servers are separated or parts of the respective servers are integrated.

In addition, when the respective servers are provided in an integrated form, at least some of the image matching server (200), the API server (300) and the AR content server (400) may be program modules at least a part of which communicates with the terminal (100). Such program modules may be included in an integrated server in the form of an operating system, an application program module or other program modules, and physically, they can be stored in a variety of well-known memory devices. In addition, these program modules may also be stored in a remote memory device capable of communicating with the integrated server. On the other hand, such program modules include routines, subroutines, programs, objects, components, data structures and the like, which execute specific abstract data types or perform specific tasks which will be described later according to the present invention, but are not limited to the above.

### Second Embodiment

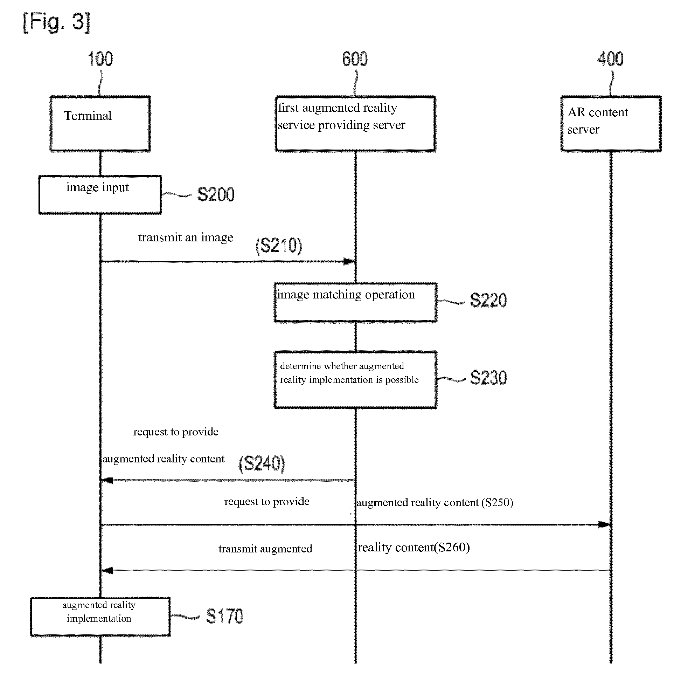

FIG. 3 is a drawing describing a data transmission and reception procedure for providing an augmented reality service in an augmented reality service providing system according to an embodiment of the present invention.

Referring to FIG. 3, the augmented reality service providing system may include a terminal (100), a first augmented reality service providing server (600) and an AR content server (400). The terminal (100) and the AR content server (400) are the same as those described with reference to FIG. 1, and the first augmented reality service providing server (600) means a server into which the image matching server (200) and the API server (300) described with reference to FIG. 1 are integrated.

While not illustrated in the figure, the first augmented reality service providing server (600) may include an AR region determination unit and a content request unit in addition to an image matching unit, and each of the units may perform an operation for providing an augmented reality service described below.

The data transmission and reception procedure for providing an augmented reality service in the augmented reality service providing system illustrated in FIG. 3 will be described as follows.

First, the terminal (100) receives an image through a camera formed therein (S200). The image may be a single image photographed through the camera or an image input in a preview state. The terminal (100) transmits the image to the first augmented reality service providing server (600) (S210), and the first augmented reality service providing server (600) performs an image matching operation on the input image (S220). A variety of conventional, well-known methods described above may be applied to the image matching operation. If it is determined that the feature information of the input image has highly similarity with the feature information of an image previously stored in the first augmented reality service providing server (600) as a result of the image matching completed by the first augmented reality service providing server (600), the AR region determination unit of the first augmented reality service providing server (600) determines whether the content related to the image input through a camera is decided to be displayed as augmented reality using the result of the image matching (S230). The matching result may be an identification symbol or index number as described above. The first augmented reality service providing server (600) determines whether the content related to the image input through the camera is decided to be displayed as augmented reality by comparing the decided identification symbol or index number with the identification symbols or index numbers previously stored in the first augmented reality service providing server (600). In addition, the first augmented reality service providing server (600) may determine whether the content on the input image is a region to be displayed as augmented reality or a region to be played back as a general image and output the content corresponding to an applicable region. If the content related to the image is decided to be displayed as augmented reality, the content request unit of the first augmented reality service providing server (600) transmits a signal for calling the content required to implement an augmented reality scenario scheduled for an applicable image to the terminal (100) (S240).

The terminal (100), which has received the signal for calling the content required to implement an augmented reality scenario from the first augmented reality service providing server (600), requests the AR content server (400) to provide the augmented reality content required to implement an augmented reality scenario (S250). Of course, the present invention is not limited to the above, but the first augmented reality service providing server (600) may directly request the AR content server (400) to provide the terminal (100) with the content required to implement the augmented reality without going through the terminal (100). If the AR content server (400) receives a signal requesting to provide the augmented reality content, it transmits previously stored augmented reality content to the terminal (100) (S260).

The terminal (100) which has received the augmented reality content from the AR content server (400) implements the augmented reality by driving an NFT engine using the augmented reality content (S270).

### Third Embodiment

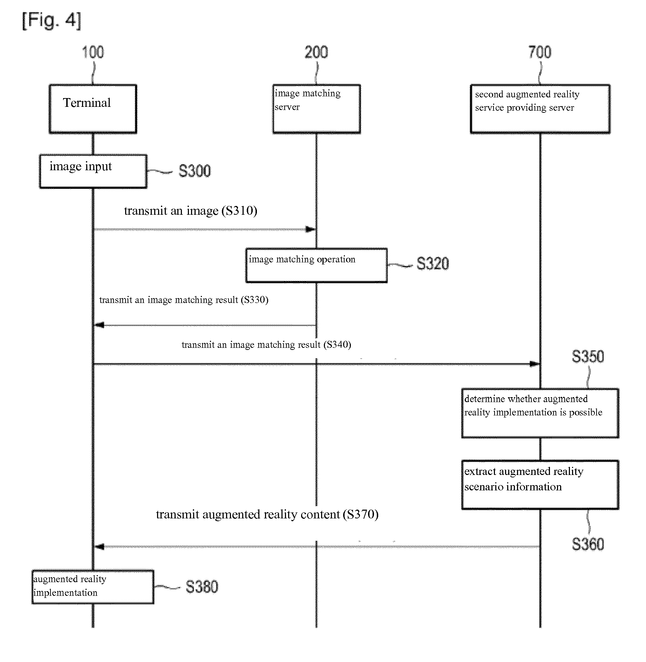

FIG. 4 is a drawing describing a data transmission and reception procedure for providing an augmented reality service in an augmented reality service providing system according to an embodiment of the present invention.

Referring to FIG. 4, the augmented reality service providing system may include a terminal (100), an image matching server (200) and a second augmented reality service providing server (700). The terminal (100) and the image matching server (200) are the same as those described with reference to FIG. 1, and the second augmented reality service providing server (700) means a server into which the API server (300) and the AR content server (400) described with reference to FIG. 1 are integrated.

While not illustrated in the figure, the second augmented reality service providing server (700) may include an AR region determination unit and a content providing unit, and each of the units may perform an operation for providing an augmented reality service described below.

The data transmission and reception procedure for providing an augmented reality service in the augmented reality service providing system illustrated in FIG. 4 will be described as follows.

First, the terminal (100) receives an image through a camera formed therein (S300). The image may be a single image photographed through the camera or an image input in a preview state. The terminal (100) transmits the image to the image matching server (200) (S310), and the image matching server (200) performs an image matching operation on the input image (S320). A variety of conventional, public methods described above may be applied to the image matching operation. If the image matching is completed by the image matching server (200) and it is determined that the feature information of the input image has high similarity with the feature information of a specific image among the images previously stored in the image matching server (200), the image matching server (200) transmits a matching result to the terminal (100) (S330).

The terminal (100) transmits the matching result transmitted from the image matching server (200) to the second augmented reality service providing server (700) (S340), and the AR region determination unit of the second augmented reality service providing server (700) determines whether the content related to the image input through the camera is to be displayed as augmented reality by comparing an identification symbol or index number determined by the image matching server (200) with previously stored identification symbols or index numbers (S350). In addition, the second augmented reality service providing server may determine whether the content on the input image is a region to be displayed as augmented reality or a region to be played back as a general image and output the content corresponding to an applicable region. If the content related to the input image is decided to be displayed as augmented reality, the second augmented reality service providing server (700) extracts the content required to implement an augmented reality scenario scheduled for an applicable image (S360). Afterward, the content providing unit of the second augmented reality service providing server (700) transmits previously stored augmented reality content needed to implement an augmented reality scenario to the terminal (100) (S370).

The terminal (100) which has received the augmented reality content from the second augmented reality service providing server (700) implements the augmented reality by driving an NFT engine using the augmented reality content (S380).

### Fourth Embodiment

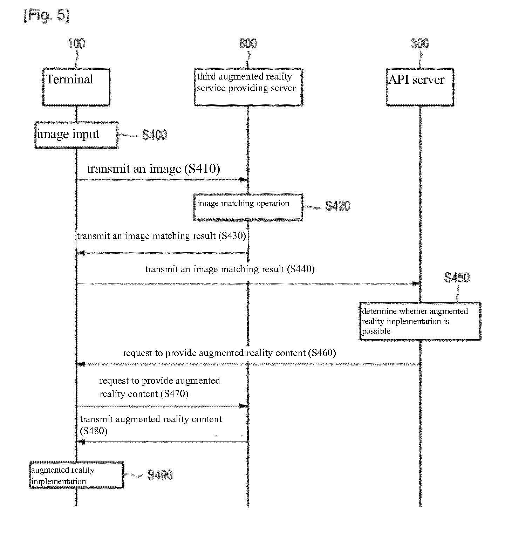

FIG. 5 is a drawing describing a data transmission and reception procedure for providing an augmented reality service in an augmented reality service providing system according to an embodiment of the present invention.

Referring to FIG. 5, the augmented reality service providing system may include a terminal (100), a third augmented reality service providing server (800) and an API server (300). The terminal (100) and the API server (300) are the same as those described with reference to FIG. 1, and the third augmented reality service providing server (800) means a server into which the image matching server (200) and the AR content server (400) described with reference to FIG. 1 are integrated.

While not illustrated in the figure, the third augmented reality service providing server (800) may include a content request reception unit and a content providing unit in addition to an image matching unit, and each of the units may perform an operation for providing an augmented reality service described below.

The data transmission and reception procedure for providing an augmented reality service in the augmented reality service providing system shown in FIG. 5 will be described as follows.

First, the terminal (100) receives an image through a camera formed therein (S400). The image may be a single image photographed through the camera or an image input in a preview state. The terminal (100) transmits the image to the third augmented reality service providing server (800) (S410), and the image matching unit of the third augmented reality service providing server (800) performs an image matching operation on the input image (S420). A variety of conventional, public methods described above may be applied to the image matching operation. If the image matching is completed by the third augmented reality service providing server (800) and it is determined that the feature information of the input image has high similarity with the feature information of a specific image among the images previously stored in the third augmented reality service providing server (800), the third augmented reality service providing server (800) transmits a matching result to the terminal (100) (S430).

The terminal (100) transmits the matching result transmitted from the third augmented reality service providing server (800) to the API server (300) (S440), and the API server (300) determines whether the content related to the image input through the camera is decided to be displayed as augmented reality using the matching result (S450). The matching result may be an identification symbol or index number as described above. The API server (300) determines whether the content related to the image input through the camera is decided to be displayed as augmented reality by comparing the identification symbol or index number decided by the third augmented reality service providing server (800) with identification symbols or index numbers previously stored in the API server (300). If the content related to the input image is decided to be displayed as augmented reality, the API server (300) transmits a signal for calling the content required to implement an augmented reality scenario scheduled for an applicable image to the terminal (100) (S460).

The terminal (100) which has received the signal for calling the content required to implement an augmented reality scenario from the API server (300) requests the content request reception unit of the third augmented reality service providing server (800) to provide the augmented reality content required to implement an augmented reality scenario (S470). Of course, the present invention is not limited to the above, but the API server (300) may directly request the content request reception unit of the third augmented reality service providing server (800) to provide the terminal (100) with the content required to implement an augmented reality scenario without going through the terminal (100). If the third augmented reality service providing server (800) receives the signal requesting to provide the augmented reality content from the terminal. (100), the content providing unit transmits previously stored augmented reality content to the terminal (100) (S480).

The terminal (100) which has received the augmented reality content from the third augmented reality service providing server (800) implements the augmented reality by driving an NFT engine using the augmented reality content (S490).

### Fifth Embodiment

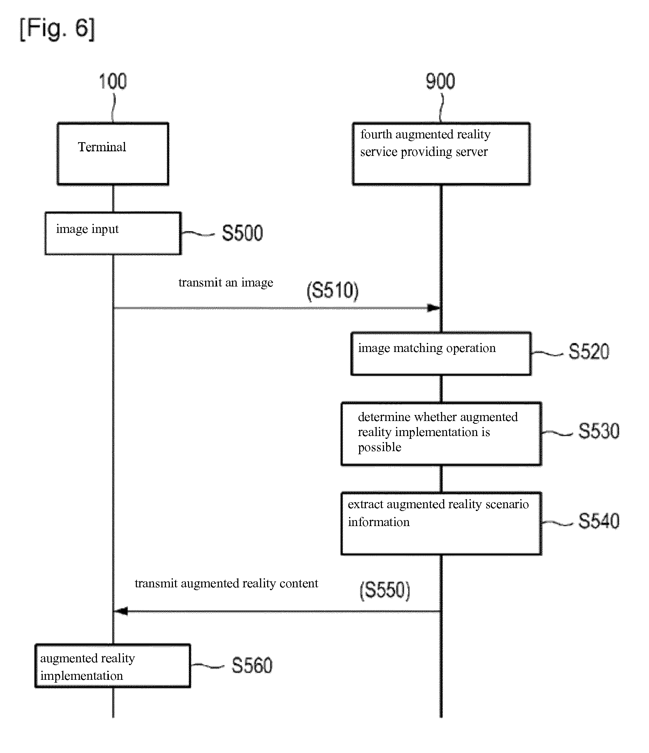

FIG. 6 is a drawing describing a data transmission and reception procedure for providing an augmented reality service in an augmented reality service providing system according to an embodiment of the present invention.

Referring to FIG. 6, the augmented reality service providing system may include a terminal (100) and a fourth augmented reality service providing server (900).

The terminal (100) is the same as that described with reference to FIG. 1, and the fourth augmented reality service providing server (900) means a server into which the image matching server (200), the API server (300) and the AR content server (400) described with reference to FIG. 1 are physically integrated.

While not illustrated in the figure, the fourth augmented reality service providing server (900) may include an AR region determination unit, a content request unit, a content request reception unit, a content providing unit and the like in addition to an image matching unit, and each of the units may perform an operation for providing an augmented reality service described below. The data transmission and reception procedure for providing an augmented reality service in the augmented reality service providing system shown in FIG. 6 will be described as follows.

First, the terminal (100) receives an image through a camera formed therein (S500). The image may be a single image photographed through the camera or an image input in a preview state. The terminal (100) transmits the image to the fourth augmented reality service providing server (900) (S510), and the fourth augmented reality service providing server (900) performs an image matching operation on the input image (S520). A variety of conventional, public methods described above may be applied to the image matching operation. If it is determined that the feature information of the input image has high similarity with the feature information of a specific image among the images previously stored in the fourth augmented reality service providing server (900) as a result of the image matching completed by the fourth augmented reality service providing server (900), the AR region determination unit of the fourth augmented reality service providing server (900) determines whether the content related to the image input through the camera is decided to be displayed as augmented reality using a matching result (S530). In addition, the fourth augmented reality service providing server may determine whether the content on the input image is a region to be displayed as augmented reality or a region to be played back as a general image and output the content corresponding to an applicable region. If the content related to the input image is decided to be displayed as augmented reality, the fourth augmented reality service providing server (900) extracts the content required to implement an augmented reality scenario scheduled for an applicable image (S540). Afterward, the content providing unit of the fourth augmented reality service providing server (900) transmits previously stored augmented reality content needed to implement an augmented reality scenario to the terminal (100) (S550).

The terminal (100), which has received the augmented reality content from the fourth augmented reality service providing server (900), implements the augmented reality by driving an NFT engine using the augmented reality content (S560).

While not mentioned for the drawing of the present invention, the image matching server may be configured to be included in the terminal (100). That is, it is possible to consider an embodiment in which both the matching and the tracking are performed in one terminal without a server.

The embodiments according to the present invention described above can be implemented in the form of program commands that can be executed through various computer components and recorded in a computer-readable recording medium. The computer-readable recording medium may include a program command, a data file, a data structure and the like solely or by combination. The program command recorded in the computer-readable recording medium may be a program command specially designed and configured for the present invention or a program command known to be used by those skilled in the art of the computer software field. Examples of the computer-readable recording medium include a magnetic medium, such as a hard disk, a floppy disk and a magnetic tape, an optical recording medium, such as a CD-ROM and a DVD, a magneto-optical medium, such as a floptical disk, and a hardware device specially configured to store and execute program commands, such as a ROM, a RAM, a flash memory and the like. Examples of the program command include a high-level language code that can be executed by a computer using an interpreter or the like, as well as a machine code generated by a compiler. The hardware devices can be configured to operate using one or more software modules in order to perform the processing according to the present invention, and vice versa.

In the foregoing discussion, although the present invention has been described in connection with the specific matters, such as the specific components, the limited embodiments, and the drawings, they are provided only for assisting overall understanding of the present invention, and the present invention is not limited to the embodiments. A person skilled in the art can make various modifications and changes to the above from these descriptions.

Therefore, the idea of the present invention should not be limited to the aforementioned embodiments, and not only the claims to be described later but also all that are modified equally or equivalently to the claims will be considered to fall within the scope of the idea of the present invention.

## Claims

1. A method for providing an augmented reality service at an API server comprising a step in which if it is determined after performing an image matching operation at an image matching server using an image input through a camera of a terminal that the input image matches with a certain image among images stored in the image matching server, the API server receives the matching results and it is determined based on the above whether contents related to the input image has been decided to be displayed as augmented reality; and a step in which if the content related to the input image is decided to be displayed as an augmented reality, the API server directly requests an AR content server to provide augmented reality content for implementing an augmented reality scenario, or requests the AR content server to provide the augmented reality content for implementing an augmented reality scenario by way of the terminal.

2. A method for providing an augmented reality service at an AR content server, comprising a step in which, if an image input through a camera of a terminal is used as a target and an image matching operation is performed at an image matching server and it is determined that the input image is matched to a specific image among images previously stored in the image matching server, and if an API server receives the matching result and determines based on it whether content related to the input image is decided to be displayed as augmented reality, the AR contents server receives a request directly from the API server to provide augmented reality content for implementing an augmented reality scenario or receives a request from the API server to provide augmented reality content for implementing an augmented reality scenario by way of the terminal; and a step in which the AR contents server transmits the augmented reality content to a terminal.

3. A method for providing an augmented realty service at a first augmented reality service providing server, comprising a step in which if the first augmented reality service providing server performs image matching on an image input through a camera of a terminal as a target and determines that the input image is matched to a specific image among images stored in the first augmented reality service providing server, the first augmented reality providing server determines based on the matching result whether content related to the input image is decided to be displayed as augmented reality; and a step in which if the first augmented reality service providing server determines that the content related to the input image is decided to be displayed as augmented reality, the first augmented reality service providing server directly requests an AR content server to provide augmented reality content for implementing an augmented reality scenario or requests the AR content server to provide augmented reality content for implementing an augmented reality scenario by way of the terminal.

4. A method for providing an augmented reality service at a second augmented reality service providing server, comprising a step in which if it is determined that the image input is matched to a specific image among images stored in the image matching server as a result of performing an image matching operation on an input image through a camera of a terminal as a target at an image matching server, the second augmented reality service providing server receives the matching result and determines based on it whether content related to the input image is decided to be displayed as augmented reality; and a step in which if the second augmented reality service providing server determines that content related to the input image is decided to be displayed as augmented reality, the second augmented reality service providing server extracts and transmits augmented reality content for implementing an augmented reality scenario to a terminal.

5. A method for providing an augmented reality service at a third augmented reality service providing server, comprising a step in which if the third augmented reality service providing server performs image matching on an image input through a camera of a terminal as a target and determines that the input image is matched to a specific image among images stored in the third augmented reality service providing server, and if it is determined that the above matching result was received by the API server and the contents related to above inputted image will be displayed as an augmented reality service by referencing to it, the third augmented reality service providing server receives a request directly from the API server to provide augmented reality content for implementing an augmented reality scenario or receives a request from the API server to provide augmented reality content for implementing an augmented reality scenario by way of the terminal; and a step in which the third augmented reality service providing server transmits the augmented reality content to a terminal.

6. A method for providing an augmented realty service at a fourth augmented reality service providing server, comprising a step in which if the fourth augmented reality service providing server performs image matching on an image input through a camera of a terminal as a target and determines that the input image is matched to a specific image among images stored in the fourth augmented reality service providing server, the fourth augmented reality providing server determines based on the matching result that whether content related to the input image is decided to be displayed as augmented reality, the fourth augmented reality providing server determines based on the matching result that whether content related to the input image is decided to be displayed as augmented reality; and a step in which if it the content related to the input image is decoded to be displayed as augmented reality, the fourth augmented reality service providing server extracts and transmits augmented reality content for implementing an augmented reality scenario to a terminal.

7. The method recited in any one of Claim 1 to Claim 6, wherein the image is a single image photographed through the camera or an image input in a preview state.

8. The method recited in Claim 7, wherein if the image is input in the preview state, and if a relative position of an object moves on the image as the terminal moves, a 3D image implemented on the image also moves.

9. The method recited in any one of Claim 1 to Claim 6, wherein if it is determined that feature information of the input image has high similarity with feature information of a specific image among the previously stored images as a result of the image matching operation, an identification symbol assigned to the specific image is provided as a result of the image matching.

10. The method recited in Claim 9, wherein the identification symbol is an index number.

11. The method recited in any one of Claim 1 to Claim 6, wherein the step in which it is determined whether the content related to the input image is decided to be displayed as augmented reality includes, a step in which an identification symbol of an image that can be displayed as augmented reality is previously stored and it is determined whether the content related to the input image is determined to be displayed as the augmented reality by comparing an identification symbol provided as a result of the image matching operation with the previously stored identification symbol.

12. The method recited in any one of Claim 1 to Claim 6, wherein the augmented reality content includes AR scenario data, feature value data created through trackable image data or applicable data and 3D object data, but the feature value data created through the trackable image data or applicable data are image data or feature information thereof so that a target determined to be matched by the image matching operation can be tracked by the terminal.

13. The method recited in any one of Claim 1, Claim 2 or Claim 5, wherein the API server determines whether the content on the input image correspond to a region to be displayed as augmented reality or a region to be played back as a general image and outputs content corresponding to an applicable region.

14. The method recited in Claim 3, wherein the first augmented reality service providing server determines whether the content on the input image is a region to be displayed as augmented reality or a region to be played back as a general image and outputs content corresponding to an applicable region.

15. The method recited in Claim 4, wherein the second augmented reality service providing server determines whether the content on the input image is a region to be displayed as augmented reality or a region to be played back as a general image and outputs content corresponding to an applicable region.

16. The method recited in Claim 6, wherein the fourth augmented reality service providing server determines whether the content on the input image is a region to be displayed as augmented reality or a region to be played back as a general image and outputs content corresponding to an applicable region.

17. An API server for providing an augmented reality service comprising an AR region determination unit that, if it is determined after performing an image matching operation at an image matching server using an image input through a camera of a terminal that the input image matches with a certain image among images stored in the image matching server, receives the matching result and determines based on it whether content related to the input image is decided to be displayed as augmented reality, and a content request unit that, if the content related to the input image is decided to be displayed as an augmented reality, directly requests an AR content server to provide augmented reality content for implementing an augmented reality scenario, or requests the AR content server to provide the augmented reality content for implementing an augmented reality scenario by way of the terminal.

18. An AR content server for providing an augmented reality service comprising a content request reception unit that, if an image input through a camera of a terminal is used as a target and an image matching operation is performed at an image matching server and it is determined that the input image is matched to a specific image among images previously stored in the image matching server, and if an API server receives the matching result and determines based on it whether content related to the input image is decided to be displayed as augmented reality, the receives a request directly from the API server to provide augmented reality content for implementing an augmented reality scenario or receives a request from the API server to provide augmented reality content for implementing an augmented reality scenario by way of the terminal; and a content providing unit that transmits the augmented reality content to a terminal.

19. A first augmented reality service providing service for providing an augmented reality service comprising an AR region determination unit that, if it is determined after performing an image matching operation at an image matching server using an image input through a camera of a terminal that the input image matches with a certain image among images stored in the image matching server, determines based on the matching result whether content related to the input image is decided to be displayed as augmented reality; and a content request unit that, if the content related to the input image is decided to be displayed as an augmented reality, directly requests an AR content server to provide augmented reality content for implementing an augmented reality scenario, or requests the AR content server to provide the augmented reality content for implementing an augmented reality scenario by way of the terminal.

20. A second augmented reality service providing service for providing an augmented reality service comprising an AR region determination unit that, if it is determined that the image input is matched to a specific image among images stored in the image matching server as a result of performing an image matching operation on an input image through a camera of a terminal as a target at an image matching server, receives the matching result and determines based on its whether content related to the input image is decided to be displayed as augmented reality; and a content providing unit that, if it is determined that content related to the input image is decided to be displayed as augmented reality, extracts and transmits augmented reality content for implementing an augmented reality scenario to a terminal.

21. A third augmented reality service providing service for providing an augmented reality service comprising a content request reception unit that, if an image matching operation is performed on the input image through a camera of a terminal and it is determined that the input image is matched to a specific image among stored images, and if an API server receives the matching result and determines based on if that content related to the input image is decided to be displayed an augmented reality, receives a request to provide augmented reality content for implementing an augmented reality scenario directly from the API server or receives a request to provide augmented reality content for implementing an augmented reality scenario from the API server by way of a terminal; and a content providing unit that transmit the augmented reality content to a terminal.

22. A fourth augmented reality service providing service for providing an augmented reality service comprising an AR region determination unit that, if it is determined after performing an image matching operation at an image matching server using an image input through a camera of a terminal that the input image matches with a certain image among images stored in the image matching server, determines based on the matching result whether content related to the input image is decided to be displayed as augmented reality; and a content providing unit that, if it is determined that content related to the input image is decided to be displayed as augmented reality, extracts and transmits augmented reality content for implementing an augmented reality scenario to a terminal.

23. The server recited in any one of Claim 17 to Claim 22, wherein the image is a single image photographed through the camera or an image input in a preview state.

24. The server recited in Claim 23, wherein if the image is input in the preview state, and if a relative position of an object moves on the image as the terminal moves, a 3D image implemented on the image also moves.

25. The server recited in any one of Claim 17 to Claim 22, wherein if it is determined that feature information of the input image has high similarity with feature information of a specific image among the previously stored images as a result of the image matching operation, an identification symbol assigned to the specific image is provided as a result of the image matching.

26. The server recited in Claim 25, wherein the identification symbol is an index number.

27. The server recited in any one of Claim 17 to Claim 22, wherein the augmented reality content includes AR scenario data, feature value data created through trackable image data or applicable data and 3D object data, but the feature value data created through the trackable image data or applicable data are image data or feature information thereof so that a target determined to be matched by the image matching operation can be tracked by the terminal.

28. The server recited in any one of Claim 17, Claim 18 or Claim 21, wherein the API server determines whether the content on the input image correspond to a region to be displayed as augmented reality or a region to be played back as a general image and outputs content corresponding to an applicable region.

29. The server recited in Claim 19, wherein the first augmented reality service providing server determines whether the content on the input image is a region to be displayed as augmented reality or a region to be played back as a general image and outputs content corresponding to an applicable region.

30. The server recited in Claim 20, wherein the second augmented reality service providing server determines whether the content on the input image is a region to be displayed as augmented reality or a region to be played back as a general image and outputs content corresponding to an applicable region.

31. The server recited in Claim 22, wherein the fourth augmented reality service providing server determines whether the content on the input image is a region to be displayed as augmented reality or a region to be played back as a general image and outputs content corresponding to an applicable region.

32. The method recited in any one of claim 1, claim 2 or claim 4, wherein the image matching operation is performed in the terminal or a separate image matching server.

33. The server recited in any one of claim 17, claim 18 or claim 20, wherein the image matching operation is performed in the terminal or a separate image matching server.

34. A computer-readable recording medium for recording a computer program intended to execute the method according to any one of claim 1 to claim 6.
